# EUROPÄISCHE PATENTSCHRIFT

(11) **EP 0 979 589 B1**
(45) Veröffentlichungstag und Bekanntmachung des Hinweises auf die Patenterteilung: **18.07.2007**
(21) Anmeldenummer: 98931995.9
(22) Anmeldetag: 24.04.1998
(51) Int. Cl.: H04Q 11/04

(54) **VERFAHREN ZUM NUTZEN VON IN BREITBAND-KOMMUNIKATIONSENDGERÄTEN VORGESEHENEN SCHMALBAND-LEISTUNGSMERKMALEN IN BREITBAND-NETZEN**
METHOD FOR USING NARROW BAND PERFORMANCE CHARACTERISTICS PROVIDED IN BROAD BAND COMMUNICATION TERMINALS IN BROAD BAND NETWORKS
PROCEDE D'EXPLOITATION DANS DES RESEAUX A LARGE BANDE DE CARACTERISTIQUES DE PUISSANCE EN BANDE ETROITE PREVUES DANS DES TERMINAUX DE COMMUNICATION A LARGE BANDE

(30) Priorität: 30.04.1997 DE 19718440
(43) Veröffentlichungstag der Anmeldung: 16.02.2000
(73) Patentinhaber: SIEMENS AKTIENGESELLSCHAFT, 80333 München (DE)
(72) Erfinder: WILLE, Klaus, D-81679 München (DE); TIETSCH, Michael, D-86916 Kaufering (DE); STÖCKL, Werner, D-82065 Baierbrunn (DE)
(86) Internationale Anmeldenummer: PCT/DE1998/001147
(87) Internationale Veröffentlichungsnummer: WO 1998/049861

(56) Entgegenhaltungen:
- EP-A- 0 711 052
- US-A- 5 521 924
- TAKEMI NISASE ET AL: "A STUDY ON THE ARCHITECTURE OF A NETWORK ADAPTER" SERVING HUMANITY THROUGH COMMUNICATIONS. SUPERCOMM/ICC, NEW ORLEANS, MAY 1 - 5, 1994, Bd. 1, 1. Mai 1994, Seiten 619-623, XP000438987 INSTITUTE OF ELECTRICAL AND ELECTRONICS ENGINEERS

## Beschreibung

Breitband-Netze sind vorwiegend nach dem Asynchron Transfer Modus - in der Fachwelt als ATM bekannt und im weiteren als solcher bezeichnet - konzipiert, wobei die zu übermittelnden bzw. zu vermittelnden Informationen in ATM-Zellen gepackt und mittels eines den ATM-Zellen vorgestellten ATM-Zellkopfes vermittelt werden. Im Nutzinformationsfeld einer Signalisierungs-ATM-Zelle ist eine Ursprungs- und Zieladresse angegeben, wobei die Ursprungsadresse ein den Verbindungsaufbau einleitendes und die Zieladresse ein Breitband-Kommunikationsendgerät repräsentiert, mit dem das den Verbindungsaufbau einleitende Breitband-Kommunikationsendgerät verbunden wird. In den Zellköpfen der ATM-Zellen sind virtuelle Pfad- und Kanalinformationen angegeben, durch die der durch die jeweilige Verbindung genutzte Pfad und der virtuelle Kanal eines Breitbandanschlusses bestimmt ist. In den Breitband-Netzen werden zukünftig auch Schmalband-Dienste genutzt bzw. benötigt - beispielsweise Telefon-Dienst in einem Breitband-Kommunikationsendgerät wie beispielsweise einem Personalcomputer. Einem Nutzer eines Schmalband-Dienstes bzw. einer Schmalband-Funktion sollen die in Schmalband-Netzen - beispielsweise dem Telefon- oder ISDN-Netz - gewohnten bzw. üblichen Leistungsmerkmale wie beispielsweise Anrufumleitung usw. zur Verfügung gestellt werden.

In der DE 42 24 388 C1 ist ein Verfahren beschrieben, bei dem ISDN-Schmalband-Kommunikationsendgeräte über ein ATM-Kommunikationsnetz an ein ISDN-Schmalband-Kommunikationssystem angeschlossen sind. Mit Hilfe von zwei Netzübergangseinheiten werden die Schmalband-Nutzinformationen und Schmalband-Signalisierungsinformationen zellenweise über festgeschaltete Ver bindungen im ATM-Kommunikationsnetz übertragen. Hierbei wird das ATM-Kommunikationsnetz als Zubringernetz für an ISDN-Schmalband-Kommunikationssysteme anzuschließende ISDN-Schmalband-Kommunikationsendgeräte genutzt - d.h. 2 x 64 kbit/s Schmalband-Nutz-kanäle und ein 16 kbit/s Signalisierungskanal.

Des weiteren ist aus EP 0 711 052 A1 ein Verfahren bekannt, durch welches bei einer, über eine ATM-Kommunikationsanlage geführten Verbindung zwischen Breitband-Kommunikationsendgeräten bekannte Schmalband-Leistungsmerkmale zur Verfügung gestellt werden können. Hierfür ist die ATM-Kommunikationsanlage über eine Interworking-Einheit mit einer Schmalband-Kommunikationsanlage verbunden. Von der ATM-Kommunikationsanlage an die Interworking-Einheit mittels ATM-Zellen übermittelte ATM-spezifische Signalisierungsinformationen werden durch diese in Schmalband-spezifische Signalisierungsinformationen umgewandelt und an die Schmalband-Kommunikationsanlage weitergeleitet. Die Schmalband-Kommunikationsanlage ermittelt anhand der empfangenen Signalisierungsinformationen entsprechende Schmalband-Steuerinformationen und übermittelt diese zurück an die Interworking-Einheit. Die Interworking-Einheit wandelt die empfangenen Schmalband-Steuerinformationen wiederum in ATM-spezifische Steuerinformationen um und übermittelt diese zurück an die ATM-Kommunikationsanlage.

Der Erfindung liegt die Aufgabe zugrunde, ein Verfahren zum Nutzen von Schmalband-Leistungsmerkmalen von Breitband-Kommunikationsendgeräten mit Schmalband-Funktionen zu schaffen. Die Aufgabe wird durch die Merkmale des Anspruchs 1 gelöst.

Der wesentliche Aspekt des erfindungsgemäßen Verfahrens ist darin zu sehen, daß für die Nutzung von Schmalband-Leistungsmerkmalen vorgesehene Verbindungen über das Breitband-Netz an eine mit dem Breitband-Netz verbundene Interworking-Einheit vermittelt werden, in der für die Nutzung von Schmalband-Leistungsmerkmalen vorgesehene, über das Breitband-Netz transparent übermittelte Schmalband-Signalisierungsinformationen aus den Breitband-Netz-gemäßen Informationen entnommen werden. In einer mit der Interworking-Einheit verbundenen logischen Schmalband-Vermittlungseinheit wird anhand der übermittelten Schmalband-Signalisierungsinformation eine Schmalband-Steuerinformation abgeleitet, die in der Interworking-Einheit (IWU) in eine Breitband-Steuerinformation (vbei) konvertiert wird. Mit deren Hilfe wird in der Interworking-Einheit eine physikalische Breitband-Vermittlungs-Einheit eingestellt, wodurch die Nutzinformationen der jeweiligen Verbindung Breitband-Netz-gemäß an das durch die Schmalband-Signalisierungsinformation bestimmte Breitband-Kommunikationsendgerät vermittelt werden.

Der wesentliche Vorteil des erfindungsgemäßen Verfahrens ist darin zu sehen, daß die Nutzung von Schmalband-Leistungsmerkmalen von Breitband-Kommunikationsendgeräten aufgrund der transparenten Übertragung der Schmalband-Signalisierungsinformation über eine Interworking-Einheit zu einer logischen Schmalband- Vermittlungseinheit das Breitband-Kommunikationsnetz gering belastet, wobei die Breitband-Funktionen durch das Breitband-Kommunikationsnetz gesteuert werden. Ein weiterer Vorteil des erfindungsgemäßen Verfahrens ist darin zu sehen, daß bei Verbindungen von Breitband-Kommunikationsendgeräten mit Schmalband-Funktionen die über das Breitband-Kommunikationsnetz an die Interworking-Einheit übermittelte Schmalband-Nutzinformation Breitband-Netz-gemäß vermittelt wird. Bei einer Realisierung des Breitband-Kommunikationsnetzes als ein ATM (Asynchron Transfer Modus)- Kommunikationsnetz - Anspruch 3 - werden die in ATM-Zellen verpackten Schmalband-Nutzinformationen nicht entpackt und nach einer Schmalband-Vermittlung wieder gepackt, sondern in ATM-Zellen verpackt ATM-Kommunikationsnetz-gemäß in einer physikalischen Breitband-Vermittlungseinheit vermittelt. Damit kann der Konvertierungsaufwand erheblich reduziert werden.

Gemäß einer vorteilhaften Weiterbildung des erfindungsgemäßen Verfahrens werden Verbindungen von für die Nutzung von Schmalband-Leistungsmerkmalen vorgesehenen Breitband-Kommunikationsendgeräten mit Hilfe einer physikalischen Schmalband-Vermittlungseinheit zu Schmalband-Kommunikationsendgeräten vermittelt, wobei die physikalische Schmalband-Vermittlungseinheit durch eine aus der Schmalband-Signalisierungsinformation in der logischen Schmalband-Vermittlungseinheit abgeleiteten Schmalband-Steuerinformation eingestellt wird und in der Interworking-Einheit die Nutzinformationen der jeweiligen Verbindung aus den Breitband-Netz-gemäßen Informationen entnommen bzw. in diese eingefügt und an die Schmalband-Vermittlungseinheit (LS-VE) übermittelt bzw. von dieser empfangen werden - Anspruch 2. Die physikalische Schmalband-Vermittlungseinheit ist nur für Verbindungen von Breitband-Kommunikationsendgeräten mit Schmalband-Funktionen zu Schmalband-Kommunikationsendgeräten vorgesehen und ist folglich für geringe Verkehrsaufkommen zu dimensionieren - d.h. kleine-Schmalband-Koppelfelder sind ausreichend.

Gemäß einer weiteren vorteilhaften Ausgestaltung des erfindungsgemäßen Verfahrens werden im Breitband-Netz die Informationen im Asynchron-Transfer-Modus übermittelt, wobei die Nutzinformationen und Schmalband-Signalisierungsinformationen transparent in ATM-Zellen über das Breitband-Netz übermittelt werden - Anspruch 3. Aufgrund der transparenten Übertragung sind in ATM-Breitbandnetzen keine zusätzlichen vermittlungstechnischen Maßnahmen erforderlich.

Die erfindungsgemäße Interworking-Einheit kann vorteilhaft in einem Schmalband-Kommunikationssystem - Anspruch 5 - oder in einem Schmalband-Server integriert sein - Anspruch 6.

Weitere vorteilhafte Ausgestaltungen des erfindungsgemäßen Verfahrens sind den weiteren Ansprüchen zu entnehmen.

Im folgenden wird das erfindungsgemäße Verfahren anhand von zwei Blockschaltbildern näher erläutert. Dabei zeigen
- Figur 1: in einem Blockschaltbild die Integration einer Interworking-Einheit für die Realisierung von Schmalband-Leistungsmerkmalen in Breitbandnetzen, und
- Figur 2: die Struktur einer Interworking-Einheit.

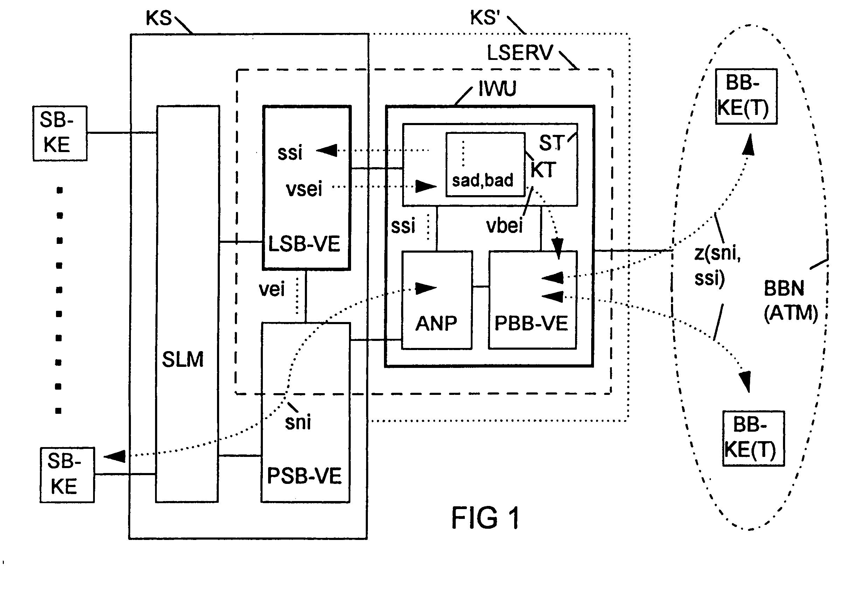

Figur 1 zeigt ein Breitband-Kommunikationsnetz BBN - in FIG 1 durch eine mit BBN bezeichnete strichpunktierte Linie angedeutet -, in dem beispielhaft zwei Breitband-Kommunikationsendgeräte BB-KE dargestellt sind. Das Breitband-Netz BBN ist mit einer physikalischen Breitband-Vertnittlungseinheit PBB-VE einer Interworking-Einheit IWU verbunden, an die eine Steuereinheit ST und eine Anpassungseinheit ANP angeschlossen ist. Die Steuereinheit ST ist mit einer logischen Schmalband-Vermittlungseinheit LSB-VE und die Anpassungseinheit ANP mit einer physikalischen Schmalband-Vermittlungseinheit PSB-VE verbunden. Die logische und physikalische Schmalband-Vermittlungseinheit LSB-VE,PSB-VE stellen Komponenten eines Kommunikationssystems KS dar, in dem des weiteren eine Teilnehmeranschlußeinrichtung SLM vorgesehen ist. Die Teilnehmeranschlußeinrichtung SLM ist sowohl mit der logischen als auch mit der physikalischen Schmalband-Vermittlungseinheit LSB-VE, PSB-VE verbunden, wobei die physikalische Vermittlungs-Einheit PSB-VE durch die mit dieser verbundenen logischen Schmalband-Vermittlungseinheit LSB-VE durch entsprechende vermittlungstechnische Einstellinformationen vei gesteuert wird. Üblicherweise ist eine physikalische Schmalband-Vermittlungseinheit BSB-VE durch ein zeitmultiplexorientiertes Koppelfeld und die logische Schmalband-Vermittlungseinrichtung LSB-VE durch eine prozessorgesteuerte Vermittlungssteuerung realisiert.

An die durch mehrere Teilnehmeranschlußmodule gebildete - nicht dargestellt - Teilnehmeranschlußeinrichtung SLM sind Schmalband-Kommunikationsendgeräte SB-KE angeschlossen. Schmalband-Kommunikationsendgeräte SB-KE stellen beispielsweise Fernsprechendgeräte oder ISDN-Fernsprechendgeräte dar. Die im Breitband-Netz BBN dargestellten Breitband-Kommunikationsendgeräte BB-KE stellen beispielsweise Personal-Computer dar, in denen eine Schmalbandfunktion, insbesondere eine Telefon- oder Fernsprechfunktion realisiert ist - in Figur 1 durch ein in Klammern gesetztes T angedeutet.

Beim Ausführungsbeispiel sei angenommen, daß das Breitband-Netz BBN durch ein ATM-Kommunikationsnetz ATM - in Figur 1 durch ein in Klammern gesetztes ATM angedeutet - realisiert ist. Hierbei werden bei einer Kommunikationsbeziehung zwischen den Breitband-Kommunikationsendgeräten BB-KE in diesen die zu übermittelnde Nutz- und Signalisierungsinformation in ATM-Zellen gepackt und über das Breitband-Netz BBN übermittelt bzw. durch dieses entsprechend der in den ATM-Zellen eingefügten virtuellen Pfad- und Kanalinformation vermittelt.

Neben diesen breitbandigen Kommunikationsbeziehungen innerhalb des Breitband-Netzes BBN können schmalbandige Kommunikationsbeziehungen sowohl zwischen den Breitband-Kommunikationsendgeräten BB-KE mit Schmalband-Funktionen T des Breitband-Netzes BBN als auch zu Schmalband-Kommunikationsendgeräten SB-KE eingeleitet bzw. aufgebaut werden. Für derartige schmalbandige Kommunikationsbeziehungen sollen erfindungsgemäß alle Schmalband-Leistungsmerkmale verfügbar bzw. nutzbar sein. Für die Realisierung der Schmalband-Leistungsmerkmale, d.h. insbesondere die vermittlungstechnische Steuerung der Schmalband-Leistungsmerkmale sind logische Schmalband-Vermittlungseinheiten LSB-VE in den bekannten Schmalband-Kommunikationssystemen KS vorgesehen. Um diese Schmalband-Leistungsmerkmale für die Schmalband-Funktion T in den Breitband-Kommunikationsendgeräten BB-KE nutzbar zu machen, ist zwischen der logischen Schmalband-Vermittlungseinheit LSB-VE und dem Breitband-Netz BBN eine Interworking-Einheit IWU eingefügt, mit deren Hilfe die Breitband-konform übermittelten Informationen - Schmalband-Signalisierungsinformationen und Schmalband-Nutzinformationen - aus den Zellen entnommen und an die logische bzw. physikalische Schmalband-Vermittlungseinheit LSB-VE,PSB-VE übermittelt werden.

Bei einer Schmalband-Kommunikationsbeziehung zwischen Breitband-Kommunikationsendgeräten BB-KE wird in der Anpassungseinheit ANP lediglich die Schmalband-Signalisierungsinformation ssi aus den ATM-Zellen entnommen und an die logische Schmalband-Vermittlungseinheit LSB-VE weitergeleitet. In der logischen Schmalband-Vermittlungseinheit LSB-VE wird eine Schmalband-Einstellinformation vsei ermittelt und an die Steuereinheit ST der Interworking-Einheit IWU übermittelt. In dieser wird die Schmalband-Einstellinforniation vsei in eine vermittlungstechnische Breitband-Einstellinformation vbei konvertiert und an die in der Interworking-Einheit IWU angeordnete physikalische Breitband-Vermittlungeinheit BB-VE übermittelt, die durch die vermittlungstechnische Breitband-Einstellinformation vbei derart eingestellt wird, daß die noch in ATM-Zellen verpackte Schmalband-Nutzinforamtion sni direkt an das adressierte Ziel-Breitband-Kommunikationsendgerät BB-KE vermittelt wird. Hierzu wird in der Steuereinheit ST die in der Schmalband-Signalisierungsinformation ssi enthaltene Schmalband-Zieladresse sad in eine Breitband-Zieladresse bad konvertiert. Diese Konvertierung erfolgt mit einer Konvertierungstabelle KT, in der jedem im Breitband-Netz BBN angeordneten Breitband-Kommunikationsendgerät BB-KE mit einer Schmalband-Funktion (T) eine Schmalband-Zieladresse sad und jeweils eine zugeordnete Breitband-Zieladresse bad angegeben ist. Diese Breitband-Zieladresse bad stellt die vermittlungstechnische Breitband-Einstellinformation vbei dar und wird an die physikalische Breitband-Vermittlungseinheit BB-VE übermittelt, die entsprechend der übermittelten vermittlungstechnischen Breitband-Einstellinformation vbei eingestellt bzw. ein Verbindungsaufbau eingeleitet wird.

Sind nur Kommunikationsbeziehungen zwischen Breitband-Kommunikationsendgeräten BB-KE (T) mit einer Schmalband-Funktion T vorgesehen, so sind für die Nutzung von Leistungsmerkmalen in diesen Breitband-Kommunikationsendgeräten BB-KE (T) lediglich die Interworking-Einheit IWU und die logische Schmalband-Vermittlungseinheit LSB-VE erforderlich, wobei diese beiden Einheiten LSB-VE, IWU zu einem Leistungsmerkmal-Server LSERV zusammengefaßt und an einen Anschluß des Breitband-Netzes BBN angeschlossen werden können - in Figur 1 durch eine mit LSERV bezeichnete strichlierte Linie angedeutet.

Bei Kommunikationsbeziehungen zu Schmalband-Kommunikationsendgeräten SB-KE sind zusätzlich die im Kommunikationssystem KS angeordnete Teilnehmeranschlußeinrichtung SLM und die physikalische Schmalband-Vermittlungseinheit BSB-VE vorgesehen. Hierbei werden insbesondere die Sprachband-Nutzinformationen sni - beispielsweise digitalisierte Sprachinformationen - über die physikalische Schmalband-Vermittlungseinheit PSB-VE an das durch die Schmalband-Signalisierungsinformation bestimmte Schmalband-Kommunikationsendgerät SB-KE vermittelt. Bei Kommunikationsbeziehungen zwischen Breitband-Kommunikationsendgeräten BB-KE mit Schmalband-Funktion T als auch mit Schmalband-Kommunikationsendgeräten SB-KE ist der Einsatz eines Kommunikationssystems KS bzw. einer Vermittlungsanlage - beispielsweise eine ISDN-Vermittlungsanlage - vorteilhaft, in der die üblicher Weise bereits vorhandene logische Schmalband-Vermittlungseinheit LSB-VE genutzt und die Interworking-Einheit IWU entweder extern in einer separaten Einheit oder in das Kommunikationssystem integriert ist - durch punktierte Linien mit der Bezeichnung KS' angedeutet ist.

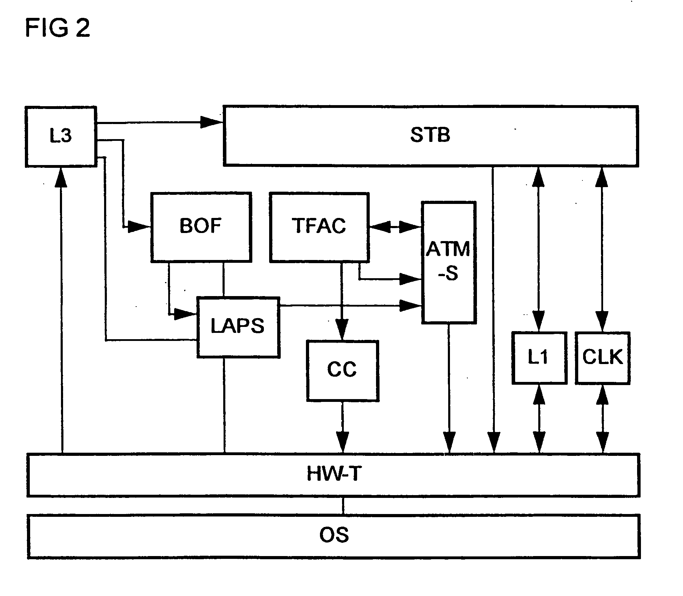

Figur 2 zeigt in einem Blockschaltbild die Software-Struktur der Interworking-Einheit IWU. Hierbei stellt ein Betriebssystem OS die Schnittstelle Hardware-Software dar. Die Summe aller Hardware-Treiber HW-T ist in Figur 2 durch ein einziges mit HW-T bezeichnetes Rechteck repräsentiert. Diese Hardware-Treiber HW-T kommunizieren mit einem Verbindungssteuermodul CC, einem Schicht-1-Modul L1, einem Taktmodul CLK, einem Signalisierungsmodul LAPS, einem Schicht-3-Modul L3 und einem Sicherheits-und Betriebstechnik-Modul STB, wobei das Sicherheits-und Betriebstechnik-Modul STB mit dem Schicht-1-Modul L1, mit dem Schicht-3-Modul L3 und dem Taktmodul CLK direkt kommuniziert. Das Schicht-3-Modul L3 übergibt Informationen sowohl an das Sicherheits-und Betriebstechnik-Modul STB als auch an das Signalisierungsmodul LAPS, das wiederum die bewerteten bzw. gebildeten Informationen an ein ATM-Signalisierungsmodul ATM-S übergibt, das ebenfalls mit dem Hardware-Treiber HW-T kommuniziert. Des weiteren ist ein Bedieneroberflächenmodul BOF und ein Steuermodul TFAC vorgesehen, das mit den Signalisierungsmodulen ATM-S, LAPS und der Verbindungssteuerung CC kommuniziert.

Das Steuermodul TFAC ist für die Vermittlungs-Steuerung der der Schmalband-Nutzinformationen sni bzw. der Schmalband-Zeitschlitze vorgesehen. Des weiteren werden in dem Sicherheits-und Betriebstechnik-Modul STB Sicherheits- und betriebstechnische relevante Vorgänge bzw. Konfigurationsdaten und Software- und Hardware-Alarme behandelt. Das Signalisierungsmodul LAPD bearbeit die Schicht 2 innerhalb der Protokollschichten für die Signalisierung zu den angeschlossenen Kommunikationsendgeräten KE bzw. realisiert für den Kommunikationsaustausch mit den Kommunikationsendgeräten KE die Sicherungsschicht 2. Die Verbindungssteuerung CC steuert die Durchschaltung der Schmalband-Nutzkanäle sowie die Durchschaltung von Breitband-Kanälen einschließlich der hierfür erforderlichen virtuellen Pfad- und Kanalinformationen. In dieser Verbindungssteuerung CC wird im wesentlichen die Hardware-Steuerung bzw. physikalische Steuerung der Schmalband- und Breitband-Nutzkanäle unabhängig von den höheren Schichten der Vermittlungssteuerung gesteuert. Mit Hilfe des Schicht-3-Moduls L3 werden die von der Verbindungssteuerung CC übermittelten Nachrichten, insbesondere Signalisierungsinformationen an die entsprechenden, zur Weiterverarbeitung vorgesehenen Einheiten, insbesondere an das Steuermodul TFAC, die Bedieneroberflächeneinheit BOF und das Signalisierungsmodul LAPS verteilt. Die ATM-Signalisierungseinheit ATM-S behandelt die Schicht-3-Signalisierungsinformationen innerhalb der Protokollschichten in Richtung Breitband-Netz BBN, beispielsweise gemäß der AAL5-Schicht (ATM Adaption Layer) eines standardisierten ATM-Protokolls - beispielsweise gemäß einem ATM-Forum-Standard. In diesem Modul ATM-S wird zusätzlich die Schicht 2 - d.h. die Sicherungsschicht - der an das Breitband-Netz BBN zu übermittelnden Signalisierungsinformationen realisiert und umgekehrt. Das Steuermodul TFAC ist für die Bearbeitung von über das Breitband-Netz BBN übermittelten Schmalband-Signalisierungsinformationen - z.B. Ursprungs- und Ziel-Rufnummern - und der übermittelten Breitband-Signalisierungsinformationen beim Verbindungsaufbau und während einer Verbindung vorgesehen. Mit Hilfe des Bedieneroberflächen-Moduls BOF werden auf die Oberfläche der Breitband-Kommunikationsendgeräte KBB-KE mit einer Schmalband-Funktion (T) abgestimmte Informationen gebildet, wobei auf eine Steuerung der Bedieneroberfläche im Stimulus-Betrieb abgestimmt ist.

## Patentansprüche

1. Verfahren zum Nutzen von in Breitband-Kommunikationsendgeräten (BB-KE) vorgesehenen Schmalband-Leistungsmerkmalen in Breitband-Netzen (BB-N),
- bei dem für die Nutzung von Schmalband-Leistungsmerkmalen vorgesehene Verbindungen über das Breitband-Netz (BB-N) an eine mit dem Breitband-Netz (BB-N) verbundene Interworking-Einheit (IWU) vermittelt werden,
- bei dem in der Interworking-Einheit (IWU) für die Nutzung von Schmalband-Leistungsmerkmalen vorgesehene, über das Breitband-Netz (BB-N) transparent übermittelte Schmalband-Signalisierungsinformationen (ssi) aus den Breitband-Netz-gemäßen Informationen entnommen werden,
- bei dem in einer mit der Interworking-Einheit (IWU) verbundenen logischen Schmalband-Vermittlungseinheit (LSB-VE) aus den übermittelten Schmalband-Signalisierungsinformationen (ssi) eine Schmalband-Steuerinformation (vsei) abgeleitet wird,
- bei dem in der Interworking-Einheit (IWU) die Schmalband-Steuerinformation (vsei) in eine Breitband-Steuerinformation (vbei) konvertiert wird,
- bei dem mit Hilfe der Breitband-Steuerinformation (vbei) in der Interworking-Einheit (IWU) eine physikalische Breitband-Vermittlungs-Einheit (PBB-VE) eingestellt wird, wodurch die jeweilige für die Nutzung von Schmalband-Leistungsmerkmalen vorgesehene Verbindung Breitband-Netz-gemäß an das durch die Schmalband-Signalisierungsinformation (ssi) bestimmte Breitband-Kommunikationsendgerät (BKE) vermittelt wird.

2. Verfahren nach Anspruch 1, **dadurch gekennzeichnet,**
- **daß** Verbindungen von für die Nutzung von Schmalband-Leistungsmerkmalen vorgesehenen Breitband-Kommunikationsendgeräten (BB-KE) mit Hilfe einer physikalischen Schmalband-Vermittlungseinheit (PSB-VE) zu Schmalband-Kommunikationsendgeräten (SB-KE) vermittelt werden,
- wobei die physikalische Schmalband-Vermittlungseinheit (PSB-VE) durch aus der Schmalband-Signalisierungsinformation (ssi) in der logischen Schmalband-Vermittlungseinheit (LS-VE) abgeleiteten Schmalband-Steuerinformation (vsei) eingestellt wird und
- in der Interworking-Einheit (IWU) die Schmalband-Nutzinformationen (sni) der jeweiligen Verbindung aus den Breitband-Netz-gemäßen Informationen entnommen bzw. in diese eingefügt und an die physikalische Schmalband-Vermittlungseinheit (PSB-VE) übermittelt bzw. von dieser empfangen werden.

3. Verfahren nach Anspruch 1 oder 2, **dadurch gekennzeichnet, daß** im Breitband-Netz (BBN) die Informationen im Asynchron-Transfer-Modus (ATM) übermittelt werden, wobei Schmalband-Nutzinformationen (sni) und Schmalband-Signalisierungsinformationen transparent in ATM-Zellen über das Breitband-Netz (BBN) übermittelt werden.

4. Verfahren nach einem der Ansprüche 1 bis 3, **dadurch gekennzeichnet,**
**daß** die logische Schmalband-Vermittlungseinheit (LSB-VE) und die physikalische Schmalband-Vermittlungseinheit (PSB-VE) durch ein Kommunikationssystem (KS) für den Anschluß von Schmalband-Kommunikationsendgeräten (SB-KE) repräsentiert ist.

5. Verfahren nach Anspruch 4, **dadurch gekennzeichnet,**
**daß** die Interworking-Einheit (IWU) in einem Kommunikationssystem (KS) integriert ist.

6. Verfahren nach einem der Ansprüche 1 bis 3, **dadurch gekennzeichnet,**
**daß** die Interworking-Einheit (IWU) sowie die logische Schmalband-Vermittlungseinheit (LSB-VE) in einem Schmalband-Server (LSER) zusammengefaßt sind.

## Claims

1. Method for using narrowband performance characteristics provided in broadband communication terminals (BB-KE) in broadband networks (BB-N),
- in which connections provided for the use of narrowband performance characteristics are switched over the broadband network (BB-N) to an interworking unit (IWU) connected to the broadband network (BB-N),
- in which narrowband signalling information (ssi) provided for the use of narrowband performance characteristics and transmitted transparently over the broadband network (BB-N) is taken from the broadband-network-based information in the interworking unit (IWU),
- in which narrowband control information (vsei) is derived from the transmitted narrowband signalling information (ssi) in a logical narrowband switching unit (LSB-VE) connected to the interworking unit (IWU),
- in which the narrowband control information (vsei) is converted into broadband control information (vbei) in the interworking unit (IWU),
- in which a physical broadband switching unit (PBB-VE) is adjusted in the interworking unit (IWU) with the help of the broadband control information (vbei), as a result of which the respective connection provided for the use of narrowband performance characteristics is switched in a way appropriate to the broadband network to the broadband communication terminal (BKE) determined by the narrowband signalling information (ssi).

2. Method according to claim 1, **characterised in that**
- connections of broadband communication terminals (BB-KE) provided for the use of narrowband performance characteristics are switched to narrowband communication terminals (SB-KE) with the help of a physical narrowband switching unit (PSB-VE),
- the physical narrowband switching unit (PSB-VE) being adjusted by narrowband control information (vsei) derived from the narrowband signalling information (ssi) in the logical narrowband switching unit (LS-VE), and
- the narrowband useful information (sni) for the relevant connection being taken from or inserted into the broadband-network-based information in the interworking unit (IWU) and transmitted to the physical narrowband switching unit (PSB-VE) or received therefrom.

3. Method according to claim 1 or 2, **characterised in that** the information is transmitted in asynchronous transfer mode (ATM) in the broadband network (BBN), narrowband useful information (sni) and narrowband signalling information being transmitted transparently in ATM cells over the broadband network (BBN).

4. Method according to one of claims 1 to 3, **characterised in that** the logical narrowband switching unit (LSB-VE) and the physical narrowband switching unit (PSB-VE) are represented by a communication system (KS) for the connection of narrowband communication terminals (SB-KE).

5. Method according to claim 4, **characterised in that** the interworking unit (IWU) is integrated into a communication system (KS).

6. Method according to one of claims 1 to 3, **characterised in that** the interworking unit (IWU) and the logical narrowband switching unit (LSB-VE) are combined in a narrowband server (LSER) .

## Revendications

1. Procédé pour utiliser des caractéristiques de prestations à bande étroite prévues dans des terminaux de communication à large bande (BB-KE) dans des réseaux à large bande (BB-N), dans lequel
- des liaisons prévues pour l'utilisation de caractéristiques de prestations à bande étroite sont commutées via le réseau à large bande (BB-N) vers une unité d'interopérabilité (IWU) reliée au réseau à large bande (BB-N),
- des informations de signalisation à bande étroite (ssi) prévues dans l'unité d'interopérabilité (IWU) pour l'utilisation de caractéristiques de prestations à bande étroite et transmises de manière transparente sur le réseau à large bande (BB-N) sont tirées des informations qui sont en conformité avec le réseau à large bande,
- une information de commande à bande étroite (vsei) est, dans une unité logique de commutation à bande étroite (LSB-VE) reliée à l'unité d'interopérabilité (IWU), dérivée des informations de signalisation à bande étroite (ssi) transmises,
- l'information de commande à bande étroite (vsei) est convertie en une information de commande à large bande (vbei) dans l'unité d'interopérabilité (IWU),
- une unité physique de commutation à large bande (PBB-VE) est réglée à l'aide de l'information de commande à large bande (vbei) dans l'unité d'interopérabilité (IWU), ce par quoi la liaison respective prévue pour l'utilisation de caractéristiques de prestations à bande étroite est commutée, en conformité avec le réseau à large bande, vers le terminal de communication à large bande (BKE) déterminé par l'information de signalisation à bande étroite (ssi).

2. Procédé selon la revendication 1, **caractérisé en ce**
- **que** des liaisons de terminaux de communication à large bande (BB-KE) prévus pour l'utilisation de caractéristiques de prestations à bande étroite sont commutées à l'aide d'une unité physique de commutation à bande étroite (PSB-VE) vers des terminaux de communication à bande étroite (SB-KE),
- l'unité physique de commutation à bande étroite (PSB-VE) étant réglée par une information de commande à bande étroite (vsei) dérivée de l'information de signalisation à bande étroite (ssi) dans l'unité logique de commutation à bande étroite (LS-VE) et
- les informations utiles à bande étroite (sni) de la liaison respective étant, dans l'unité d'interopérabilité (IWU), tirées des informations qui sont en conformité avec le réseau à large bande resp. insérées dans celles-ci et transmises à l'unité physique de commutation à bande étroite (PSB-VE) resp. reçues par celle-ci.

3. Procédé selon la revendication 1 ou 2, **caractérisé en ce que**, dans le réseau à large bande (BBN), les informations sont transmises dans le mode de transfert asynchrone (ATM), des informations utiles à bande étroite (sni) et des informations de signalisation à bande étroite étant transmises de manière transparente dans des cellules ATM sur le réseau à large bande (BBN).

4. Procédé selon l'une des revendications 1 à 3, **caractérisé en ce que** l'unité logique de commutation à bande étroite (LSB-VE) et l'unité physique de commutation à bande étroite (PSB-VE) sont représentées par un système de communication (KS) pour le raccordement de terminaux de communication à bande étroite (SB-KE).

5. Procédé selon la revendication 4, **caractérisé en ce que** l'unité d'interopérabilité (IWU) est intégrée dans un système de communication (KS).

6. Procédé selon l'une des revendications 1 à 3, **caractérisé en ce que** l'unité d'interopérabilité (IWU) ainsi que l'unité logique de commutation à bande étroite (LSB-VE) sont regroupées pour constituer un serveur à bande étroite (LSER).
